# EUROPEAN PATENT APPLICATION

(11) **EP 0 971 517 A2**
(43) Date of publication of application: **12.01.2000**
(21) Application number: 99113586.4
(22) Date of filing: 08.07.1999
(51) Int. Cl.: H04L 29/06, G06F 9/46

(54) **Collaboration network system**

(30) Priority: 10.07.1998 JP 19636098
(71) Applicant: MATSUSHITA ELECTRIC INDUSTRIAL CO., LTD., Kadoma-shi, Osaka (JP)
(72) Inventor: Kojima, Akio, Neyagawa-shi, Osaka-fu (JP); Matsukawa, Shigeru, Hirakata-shi, Osaka-fu (JP); Murata, Kazuyuki, Kyotanabe-shi, Kyoto-fu (JP)
(74) Representative: Altenburg, Udo, Dipl.-Phys.

(57) **Abstract**

In a collaboration network system (CNS) which properly distributes a job in accordance with each processing capability of every available resource in a multi-distribution processing type network to secure the job to be efficiently executed, a host server (H-SVR) includes a guest system program (111) incorporated into an application layer (11). A guest system (GS) includes a distribution criteria (35) to distribute a sequence operation to the host server (H-SVR) and a guest net server managing part (34:342) issuing the guest system program (111), in accordance with the distribution criteria (35), with a job execution request for having the host server (H-SVR) execute a job. When receiving the job execution request, the host server (H-SVR) executes the job execution request via the guest system program (111).

## Description

### BACKGROUND OF THE INVENTION

### Field of the Invention

The present invention relates to collaboration network systems in which a guest system operating in accordance with various sequences is connected to a host system operating in accordance with its own sequence, and the guest system executes distribution processing on a job by utilizing resources included in the host system. More particularly, the present invention relates to a multi-network system in which an already-existing client server network is connected to a peripheral device or another client server network as a new client so as to constitute a guest network having the newly provided client as a server. More particularly, the present invention further relates to a collaboration network system in which the server in the guest network executes distribution processing on the respective resources included in the multi-network system in accordance with a job request from a user.

### Description of the Background Art

Conventionally, when executing distribution processing on a job in a client server network being a distributing-type processing system, a user or network manager needs to selectively determine in advance which resource included in the network is used for a particular job. Therefore, the user or network manager examines in advance the processing capability of every resource included in the network, and provides a particular resource with a function of carrying out the processing. In accordance with the determined selection, the user or network manager presets a control sequence or an application program for utilizing the respective resources in a network server. Such preset processing executed on the server takes considerably and highly specialized knowledge, and it is thus practically impossible for the general users to execute. Even for a person having the specialized knowledge, the processing is complicated enough as is required to reset every time the resources of the network are altered.

In the present days of rapidly-progressing technology and easily-available low-cost and high-performance resources, the resources connected to the network may be frequently updated. And it is rather difficult to precisely keep track of the updated resource environment in real time. Even if the updated resource environment is precisely kept track and the server is correctly preset, however, a plurality of resources included in the network are not in the same state and the state thereof changes with a lapse of time. This change includes, for example, sudden failure of the resources, alternation of resource-setting by the user, and non-operational accessories due to wear. The server should be preset in such manner that job distribution is properly executed in response to such changes.

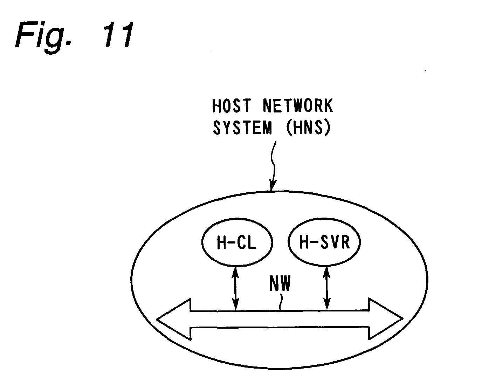

Hereinafter, by referring to FIG. 11, distribution processing to allocate functions between a client and a server executed in a client server network system having a personal computer as a server and a multi-function-peripheral (MFP) as a client is described. A client H-CL and a server H-SVR are respectively connected through network NW such as LAN. The server H-SVR is previously provided with a plurality of processing service functions, and on receipt of a request of service from the client H-CL, the server H-SVR executes a command corresponding to the service and then returns the processing result to the client H-CL. Therefore, the contents processed in a program provided on the multi-function-peripheral side being the client H-CL and the contents processed in the personal computer being the server H-SVR are previously determined.

When the multi-function-peripheral needs a function possessed by the server H-SVR to carry out a job allocated by the user, the multi-function-peripheral outputs a service request for the function to the server. In response to the service request, the server executes the processing by using the necessitated function, and at the same time returns the processing result to the multi-function-peripheral to make the requested service available. The service can be put available by sequentially calling processing of the functions previously provided in the server as individual functions. In this manner, the multi-function-peripheral satisfies the user's job request.

As described in the foregoing, it is rather difficult to correctly grasp the capabilities of every resource usable in the network. Accordingly, it is practically impossible for the user to select a resource best suited to distribute a job. Moreover, as a particular resource is selected from all the resources, it is impossible to effectively combine best suited resources available by the network to use or use all the best-suited resources. As a result, the network resources are not efficiently utilized. That is, despite the capability of processing provided for the entire network, efficiency in carrying out a job is impaired because selection of resources to be used, i.e. the manner of distribution is improper. At worst, a job may be distributed to the resource already-removed from the system, and may result in failure.

Further, in order to realize the network structure in which a system structure on the multi-function-peripheral side is flexibly constructed from low-end to high-end, and the server is provided with the expandable scope of the function thereof, the aforementioned manner in which fixed processing between the client and the server is previously provided for the server has a lot of restrictions. For example, in order to expand the scope of function, both the multi-function-peripheral side and the server side need maintenance for a program executing the fixed processing. Some functions to be expanded involve the process of entirely making over the processing functions to be provided, and the process takes a considerably long period of time to develop.

Further, when image data is processed among various memory resources, a process substance (data) is exchanged between the multi-function-peripheral and the server. The process substance is exchanged via a net having a limited transfer capacity for every service request of the respective functions or every time a service becomes available. Therefore, communication or data transfer between applications takes time. As a result, a throughput cannot be ensured for a single job execution, and therefore network performance is considerably impaired.

Therefore, the present invention is made to solve the aforementioned problems, and an object thereof is to provide a collaboration network system which properly distributes a job in accordance with each processing capability of every available resource in a multi-distributing type network to secure the job to be efficiently executed.

### SUMMARY OF THE INVENTION

The present invention has the following features to solve the problems above.

A first aspect of the present invention is directed to a collaboration network system in which a first system operating in accordance with a first sequence is connected to a second system operating in accordance with a second sequence, and the second system primarily executes a sequence operation while utilizing a resource of the first system,
the first system comprising
   an interface part incorporated into an application layer executing the first sequence,
the second system comprising:
   a distribution criteria storing part for storing distribution criteria to distribute the sequence operation to the first system; and
   a job execution requesting part for issuing the interface part, in accordance with the distribution criteria, with a job execution request for having the first system execute a job, wherein
   when receiving the job execution request, the first system executes the job execution request as a part of the first sequence via the interface part.

As described above, in the first aspect, the second system can have the first system execute a job, in accordance with the distribution criteria, via the interface layer incorporated into the application layer executing the first sequence.

According to a second aspect, in the first aspect, said job execution requesting part
comprises a job determining part for determining, in accordance with the distribution criteria, the job to be executed in the first system to generate job request information, and
generates the job execution request in accordance with the job request information.

As described above, in the second aspect, the second system can have the first system execute a job, in accordance with the distribution criteria, via the interface layer incorporated into the application layer executing the first sequence.

According to a third aspect, in the first aspect, when receiving the job execution request, the first system executes the job execution request as a part of the first sequence via the interface part, and further returns a result of execution to the second system.

As described above, in the third aspect, the first system returns the execution result of the job allocation to the second system, whereby the job is further shared and executed in the second system.

According to a fourth aspect, in the first aspect, the interface part further comprises an initial program storing part for storing an initialization program,
after the interface part running the initialization program, the first system is caused to detect the resource included in the first system to notify the second system,
the second system determines, in accordance with the resource of first system detected by the interface part and the distribution criteria stored in the distribution criteria storing part, tasks for every job to be executed as a sequence operation of the first system, and then generates collaboration processing information, and
the job execution requesting part issues the job execution request in accordance with the collaboration processing information.

As described above, in the fourth aspect, the job execution request is made based on the collaboration information determined and generated by the sequence of the first system in accordance with the detected resource of the first system and the distribution criteria, whereby the job is more properly distributed between the resources of the first and second systems.

According to a fifth aspect, in the fourth aspect, the interface part further comprises a guest net client information storing part for storing a processing program executing the first sequence registered in the first system,
the initialization program detects initialization information registered in the first system to store in the guest net client information storing part, and
the job execution requesting part generates the collaboration processing information in accordance with initialization information stored in the guest net client information storing part and distribution criteria information reserved in the distribution criteria information storing part.

According to a sixth aspect, in the fifth aspect, the collaboration processing information comprises
a procedure to process tasks for every job and addressee information, wherein
the addressee information comprises server information, a program number, version information, and applicable resource information.

According to a seventh aspect, in the sixth aspect, the server information
comprises an IP address, a server name, and applicable protocol information of the first system,
   the program number comprises an address where a program exists in a server,
   the version information comprises available service and a program version, and
   the applicable resource information includes information indicating which resource in the first system is used.

According to an eighth aspect, in the seventh aspect, the second system further comprises:
a job request accepting part for accepting a job request from a user; and
a service displaying part for displaying a service available by the second system, wherein after the sequence operation primarily executed by the second system being confirmed, the job execution requesting part registers a function which can be put available by the sequence operation in the job request accepting part and the service displaying part.

As described above, in the seventh aspect, the user can confirm the contents of available service by the service displaying part of the second system, and then can instruct the second job request accepting part to execute a job for the service.

According to a ninth aspect, in the first aspect, the interface part further comprises a task executing part for storing a necessitated program including a library of a process task executing the sequence operation, and
executes the program stored in the task executing part to execute the sequence operation in response to the job execution request.

According to a tenth aspect, in the fifth aspect, the distribution criteria information comprises:
information peculiar to the first system including basic function, information and versions on basic processing of the first system; and
an externally-available function indicating a sequence to be executed in the second system.

According to an eleventh aspect, in the fourth aspect, the second system further comprises a service managing part for detecting the resource included in the first system at predetermined time intervals, and
updates the collaboration processing information when there is any change of state in the resource of first system.

As described above, in the eleventh aspect, the job execution request can be always properly executed as a part of the first sequence in such manner that the resource of first system is detected repeatedly first by the interface means then by the service managing part of the second system at predetermined time intervals so as to update the collaboration processing information depending on the state of resource.

According to a twelfth aspect, in the fourth aspect, the service managing part detects the resource included in the first system in accordance with a state change notifying signal outputted from the first system.

As described above, in the twelfth aspect, a load for processing imposed on the second system can be reduced by keeping the detection of a change of resource state of the first system in accordance with the state change notifying signal outputted from the first system even after the detection completed by the interface means. In this manner, the collaboration processing information can also be updated without any delay in catching up with the change of the resource state.

A thirteenth aspect of the present invention is directed to a method of constructing a collaboration network system in which a first system operating in accordance with a first sequence is connected to a second system operating in accordance with a second sequence, and the second system primarily executes a sequence operation while utilizing a resource of the first system, the method comprising:
a system connection step of connecting the second system to the first system;
an interface incorporation step of incorporating an interface part into an application layer executing the first sequence of the first system;
an initialization detection step of, by the interface part, detecting the resource included in the first system and generating initialization information; and
a task distribution determination step of, in accordance with the detected resource information and predetermined distribution criteria, determining tasks for every job to be executed as a sequence operation of the first system to generate and store collaboration processing information, wherein
the interface part causes, in accordance with the collaboration processing information, a part of a sequence operation of the second system to execute as a part of the sequence operation of first system.

As described above, in the thirteenth aspect, appropriate processing distribution can be achieved by determining collaboration processing between the first and second systems based on the resource of first system detected by the interface part incorporated into the application layer executing the first sequence to the first system and the predetermined distribution criteria.

According to a fourteenth aspect, in the thirteenth aspect, the method further comprises
an available function registration step of, in accordance with the collaboration processing information generated in the task distribution determination step, registering an available function by the sequence operation in the second system, wherein
in this stage, a function in collaboration processing is started to serve.

As described above, in the fourteenth aspect, the sequence operation executed by the first or second system is registered in the second system, whereby the sequence operation can be utilized from the second system.

According to a fifteenth aspect, in the fourteenth aspect, the method further comprises
a change of resource state detection step of detecting a state of the resource included in the first system detected by the initialization detection step at predetermined time intervals, wherein
when any change of state in the resource is detected, the initialization detection step, the task distribution determination step, and the available function registration step are executed.

As described above, in the fifteenth aspect, even after the resource of the first system is initially detected, the state of resource is repeatedly detected at predetermined time intervals. Therefore, the job can be always properly executed to the first system in response to states of the resource.

According to a sixteenth aspect, in the thirteenth aspect, the system connection step comprises:
a physical connection step of physically connecting the second system to the first system; and
a mutual-communication environment establishment step of establishing a communication path between the physically-connected first system and second system.

According to a seventeenth aspect, in the sixteenth aspect, an interface incorporation step
incorporates the interface part into the application layer executing the first sequence of the first system via the communication path established by the mutual-communication environment establishment step, and
further incorporates an initialization program into the interface part.

As described above, in the seventeenth aspect, the initialization program is provided to the interface part incorporated into the application layer of the first system. Therefore, the initialization program can directly be accessed by sending a command from the second system to the interface layer.

According to an eighteenth aspect, in the seventeenth aspect, the initialization detection step comprises:
a collaboration processing environment construction step of running the initialization program to provide the first system with a mechanism for collaboration processing; and
an available function acquisition step of detecting and acquiring a function available by the first system from the resource of first system disclosed by a service disclosure function of the first system.

According to a nineteenth aspects, in the eighteenth aspect, the task distribution determination step
allocates collaboration information, in accordance with the distribution criteria, by registering an execution program, generating and registering the collaboration processing information.

A twentieth aspect of the present invention is directed to a second system being connected to a first system operating in accordance with a first sequence, and primarily executing a second sequence operation while utilizing a resource of the first system in which an application layer is provided with an interface part, wherein
the second system comprises:
   a distribution criteria storing part for storing distribution criteria when a part of the second sequence operation is distributed to the first system; and
   a job execution requesting part for issuing the interface part with a job execution request for having the first system execute, and
causes a job execution request to execute as a part of the first sequence via the interface part.

As described above, in the twentieth aspect, the second system instructs, via the interface part, the first system to execute a job according to the distribution criteria to distribute a part of the sequence operation between the first and second systems. Therefore, the second system can have the first system execute the requested job as the first sequence thereof.

According to a twenty-first aspect, in the twentieth aspect, the second system comprises:
a distribution criteria storing part for storing distribution criteria to distribute the sequence operation to the first system; and
a job execution requesting part for issuing the interface part with the job execution request for having the first system execute in accordance with the distribution criteria, wherein
   when receiving the job execution request, the first system executes the job execution request as a part of the first sequence via the interface part.

As described above, in the twenty-first aspect, the distribution criteria to distribute a part of the sequence operation between the first and second systems is provided in the second system. Therefore, the second system can primarily execute the second sequence operation while utilizing the resource of the first system.

According to a twenty-second aspect, in the twenty-first aspect, the job execution requesting part
determines, in accordance with the distribution criteria, a job to be executed in the first system, comprises a job determining part for generating job request information, and generates the job execution request in accordance with the job request information.

As described above, in the twenty-second aspect, the second system determines a job to be executed in the first system in accordance with the distribution criteria to distribute a part of the sequence operation between the first and second systems. Therefore, the second system can primarily execute the second sequence operation while utilizing the resource of first system.

According to a twenty-third aspect, in the twenty-first aspect, the interface part further comprises an initialization program,
after the interface part running the initialization program, the first system is caused to detect the resource included in the first system to notify the second system,
the second system determines, in accordance with the resource of the first system detected by the interface part and the distribution criteria stored in the distribution reference storing part, tasks for every job to be executed as a sequence operation of the first system to generate collaboration processing information, and
the job execution requesting part, in accordance with the collaboration processing information, issues the job execution request.

As described above, in the twenty-third aspect, the first system notifies its own resource to the second system, and the second system determines a job for the first system in accordance with the notified resource of the first system and the distribution criteria. In this manner, the second system primarily executes collaboration processing.

According to a twenty-fourth aspect, in the twenty-third aspect, the interface part further comprises a guest net client information storing part for storing a processing program executing the first sequence registered in the first system,
the initialization program detects initialization information registered in the first system to store in the guest net client information storing part, and
the job execution requesting part, in accordance with the initialization information stored in the guest net client information storing part and the distribution criteria information reserved in the distribution criteria information storing part, generates the collaboration processing information.

As described above, in the twenty-fourth aspect, the first system notifies its own resource to the second system, and the second system determines a job for the first system in accordance with the notified resource of the first system and the distribution criteria. In this manner, the second system primarily executes collaboration processing.

According to a twenty-fifth aspect, in the twenty-fourth aspect, the collaboration processing information comprises
a procedure to process tasks for every job and addressee information, wherein
the addressee information includes server information, a program number, version information, and applicable resource information.

According to a twenty-sixth aspect, in the twenty-fifth aspect, the server information comprises
an IP address, a server name, and applicable protocol information of the first system,
the program number comprises an address where a program exists in a server,
the version information comprises available service and a program version,
the applicable resource information comprises information indicating which resource in the first system is used.

According to a twenty-seventh aspect, in the twenty-sixth aspect, further comprising:
a job request accepting part for accepting a job request from a user; and
a service displaying part for displaying a service available by the second system, wherein
after the sequence operation primarily executed by the second system being confirmed, the job execution requesting part registers a function which can be put available by the sequence operation in the job requesting accepting part and the service displaying part.

As described above, in the twenty-seventh aspect, the user can confirm the contents of available service by the service displaying part of the second system, and then can instruct the job request accepting part to execute a job for the service.

According to a twenty-eighth aspect, in the twenty-fourth aspect, the distribution criteria information comprises:
information peculiar to the first system including basic function, information and version on basic processing of the first system; and
an externally-available function indicating a sequence to be executed in the second system.

According to a twenty-ninth aspect, in the twenty-third aspect, the second system further comprises a service managing part for detecting the resource included in the first system at predetermined time intervals, and
updates the collaboration processing information when there is any change of state in the resource of first system.

As described above, in the twenty-ninth aspect, even after the resource of first system is initially detected, the state of resource is repeatedly detected at predetermined time intervals. Therefore, the job can be always properly executed to the first system in response to states of the resource.

According to a thirtieth aspect, in the twenty-third aspect, the service managing part detects the resource included in the first system in accordance with a state change notifying signal outputted from the first system.

As described above, in the thirtieth aspect, a load for processing imposed on the second system can be reduced by keeping the detection of a change of a resource state of the first system in accordance with the state change notifying signal outputted from the first system after the detection completed by the interface means. In this manner, the collaboration processing information can also be updated without any delay in catching up with the change of resource state.

A thirty-first aspect of the present invention directed to a recording medium including a program incorporated into an application layer of a first system to be executed in a collaboration network system in which the first system operating in accordance with a first sequence is connected to a second system operating in accordance with a second sequence, the program being for realizing an operational environment in the collaboration network system comprising:
an initialization detection step of detecting a resource included in the first system and generating initialization information;
a task distribution determination step of, in accordance with the detected resource information and predetermined distribution criteria previously possessed by the second system, determining tasks for every job to be executed as a sequence operation of the first system to generate and store collaboration processing information; and
a step of, in accordance with the collaboration processing information, causing a part of sequence operation of the second system as a part of said sequence operation of first system.

As described above, in the thirty-first aspect, the respective programs can be easily updated by upgrading, for example, with the program necessary for constructing the collaboration network system provided in the recording medium.

A thirty-second aspect of the present invention is directed to a guest system being connected to a host system operating in accordance with a first sequence, and operating in accordance with a second sequence constructing a collaboration network system in which a resource of the host system is utilized, the guest system comprising:
a resource detecting part for detecting the resource of first system; and
a sequence altering part for altering the first sequence in accordance with the detected resource of host system.

As described above, in the thirty-second aspect, the sequence of the host system is altered in the sequence altering part in accordance with the resource of the first system detected in the resource detecting part, thereby rendering the resource of the host the system execute the job of the guest system.

According to a thirty-third aspect, in the thirty-second aspect, the guest system further comprises
a service adding part for, in accordance with the detected resource of a host system, adding a service function of the host system to a service function of the guest system to generate a new service function.

As described above, in the thirty-third aspect, the guest system can put a service executable with the resource of the host system available along with the services originally available therein.

According to a thirty-fourth aspect, in the thirty-third aspect, the service adding part further comprises
a task distributing part determining distribution of tasks between the resources of host system and guest system for every job executing the new service function.

As described above, in the thirty-fourth aspect, tasks to be processed by the resources of the host and guest systems is distributed for every job executing the new service function. Therefore, the resources can be effectively utilized.

According to a thirty-fifth aspect, in the thirty-fourth aspect, the service adding part further comprises
a task distribution information storing part for storing information on tasks to be allocated between the host system and the guest system for every job executing the new service function.

As described above, in the thirty-fifth aspect, information on tasks to be distributed by the resources of the host and guest systems for every job executing the new service function is stored in the task distribution information storing part. Therefore, the information is always available for distribution processing.

According to a thirty-sixth aspect, in the thirty-fourth aspect, the resource detecting part repeatedly detects the resource of the host system at predetermined time intervals.

As described above, in the thirty-sixth aspect, the resource of the host system is repeatedly detected. Therefore, a job can be properly executed to the resource of the host system even when a change of state is observed therein.

According to a thirty-seventh aspect, in the thirty-second aspect, the resource detecting part displays a change in the resource of host system, if any.

As described above, in the thirty-seventh aspect, any change in the resource of the host system is promptly displayed by the resource detecting part. Therefore, it is not necessary to repeatedly detect the resource thereof.

According to a thirty-eighth aspect, in the thirty-second aspect, the guest system further comprises
an interpreter layer incorporating part for incorporating the host system with the interpreter layer accepting a command from the guest system.

As described above, in the thirty-eighth aspect, the guest system is provided with the interpreter incorporating part incorporating an interpreter layer into the host system. Therefore, the guest system can primarily construct a collaboration network system with respect to the host system.

According to a thirty-ninth aspect, in the thirty-eighth aspect, the guest system further comprises
a service adding part for adding, in accordance with the detected resource of host system, a service function of the host system to a service function of the guest system to generate a new service function.

As described above, in the thirty-ninth aspect, the guest system is provided with the interpreter incorporating part incorporating the interpreter layer into the host system. Therefore, the guest system can primarily construct a collaboration network system with respect to the host system.

According to a fortieth aspect, in the thirty-eighth aspect, the interpreter layer incorporating part further comprises
a new service execution sequence incorporating part for incorporating the host system with a sequence executing a new service function.

As described above, in the fortieth aspect, the guest system is provided with the interpreter incorporating part incorporating the interpreter layer into the host system. Therefore, the guest system can primarily construct a collaboration network system with respect to the host system.

A forty-first aspect of the present invention is directed to a collaboration network system in which a first system operating in accordance with a first sequence is connected to a second system operating in accordance with a second sequence to distribute a job of the second system to a resource of the first system, the collaboration network system comprising:
a resource detecting for detecting the resource of first system; and
a sequence altering part for altering the first sequence in accordance with the detected resource of first system.

As described above, in the forty-first aspect, the first sequence is altered in the sequence altering part in accordance with the resource of the first system detected in the resource detecting part, thereby rendering the resource of the first system execute the job of the second system.

According to a forty-second aspect, in the forty-first aspect, the collaboration network system further comprises
a service adding part for adding, in accordance with the detected resource of first system, a service function of the first system to a service function of the second system to generate a new service function.

As described above, in the forty-second aspect, the second system can put a service executable with the resource of the first system available along with the services originally available therein.

According to a forty-third aspect, in the forty-second aspect, the service adding part comprises
a task distribution part for determining distribution of tasks between the resources of first system and second system for every job executing the new service function.

As described above, in the forty-third aspect, tasks to be processed by the resources of the host and guest systems are distributed for every job executing the new service function. Therefore, the resources can be effectively utilized.

According to a forty-fourth aspect, in the forty-third aspect, the service adding part comprises
a task distribution information storing part for storing information on tasks to be allocated between the host system and the guest system for every job executing the new service function.

As described above, in the forty-fourth aspect, information on tasks to be distributed by the resources of the host and guest systems for every job executing the new service function is stored in the task distribution information storing part. Therefore, the information is always available for distribution processing.

According to a forty-fifth aspect, in the forty-fourth aspect, the resource detecting part repeatedly detects the resource of first system at predetermined time intervals.

As described above, in the forty-fifth aspect, the resource of host system is repeatedly detected. Therefore, the job can be properly executed to the resource of the host system even if any change is observed in the state thereof.

According to a forty-sixth aspect, in the forty-first aspect, the resource detecting part displays a change of the resource of first system, if any.

As described above, in the forty-sixth aspect, any change in the resource of the host system is promptly displayed by the resource detecting part. Therefore, it is not necessary to repeatedly detect the resource.

A forty-seventh aspect of the present invention is directed to a method of constructing a collaboration network system in which a first system operating in accordance with a first sequence is connected to a second system operating in accordance with a second sequence to distribute a job of the second system to a resource of the first system, the method comprising:
a resource detection step of detecting the resource of the first system; and
a sequence alternation step of altering the first sequence in accordance with the detected resource of a first host system.

As described above, in the forty-seventh aspect, the first sequence is altered in accordance with the resource of the first system, thereby rendering the resource of the first host system execute the job of the second system.

According to a forty-eighth aspect, in the forty-seventh aspect, the method further comprises
a service addition step of adding, in accordance with the detected resource of first system, a service function of the first system to a service function of the second system to generate a new service function.

As described above, in the forty-eighth aspect, the second system can put a service executable with the resource of the first system available along with the services originally available therein.

According to a forty-ninth aspect, in the forty-eighth aspect, the service addition step comprises
a task distribution step of determining distribution of tasks between the resources of first system and second system for every job executing the new service function.

According to a fiftieth aspect, in the forty-seventh aspect, the resource detection step comprises
a resource update detection step of repeatedly detecting the resource of first system at predetermined time intervals.

According to a fifty-first aspect, in the forty-seventh aspect, the resource detection step comprises
a resource update display step of displaying a change of the resource of first system, if any.

According to a fifty-second aspect, in the forty-seventh aspect, the host system further comprises
an interpreter layer incorporation step of incorporating an interpreter layer accepting a command from the guest system.

According to a fifty-third aspect, in the fifty-second aspect, the method further comprises:
a mutual-communication environment construction step of constructing a mutual-communication environment between the first system and the second systems;
a collaboration environment incorporation step of incorporating the first system with a mechanism for achieving collaboration processing with the second system,
a processing allocation determination step of determining, in accordance with the detected resource, processing allocation between the first and second systems; and
a new function offer step of determining a new function in accordance with the determined processing allocation, and putting the same available.

According to a fifty-fourth aspect, in the fifty-second aspect, the method further comprises
a resource update detection step of repeatedly detecting the resource of first system at predetermined time intervals.

According to a fifty-fifth aspect, in the fifty-second aspect, when a request for carrying out job is generated in the second system,
the second sequence comprises a job request step of transmitting the request for carrying out job to the interpreter layer, and
the interpreter layer comprises a step of controlling the second system in accordance with the processing allocation.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing the structure of a collaboration network system shown in FIG. 8.
FIG. 2 is a flow chart illustrating a method of constructing the collaboration network system in FIG. 1.
FIG. 3 is a step sequence diagram showing the detailed steps of the flow chart in FIG. 2 respectively for a host server (A) and a guest server (B)
FIG. 4 is a block diagram showing the detailed structure of a guest system program storing part in FIG. 1.
FIG. 5 is a diagram illustrating the respective contents of collaboration processing information (A) and the distribution reference information (B) in FIG. 1.
FIG. 6 is a diagram illustrating external request information shown in FIG. 1.
FIG. 7 is a sequence diagram illustrating distribution and execution of tasks according to the present invention.
FIG. 8 is a diagram illustrating a concept of the collaboration network system according to the present invention constructed by a single host network system and a single guest system.
FIG. 9 is a diagram illustrating a concept of the collaboration network system according to the present invention constructed by a single host network system and a single guest network system.
FIG. 10 is a diagram illustrating a concept of the plurality of collaboration network systems according to the present invention constructed by a single host network system and a plurality of guest network systems.
FIG. 11 is a diagram illustrating a conventional client server network system.

### DESCRIPTION OF THE PREFERRED EMBODIMENTS

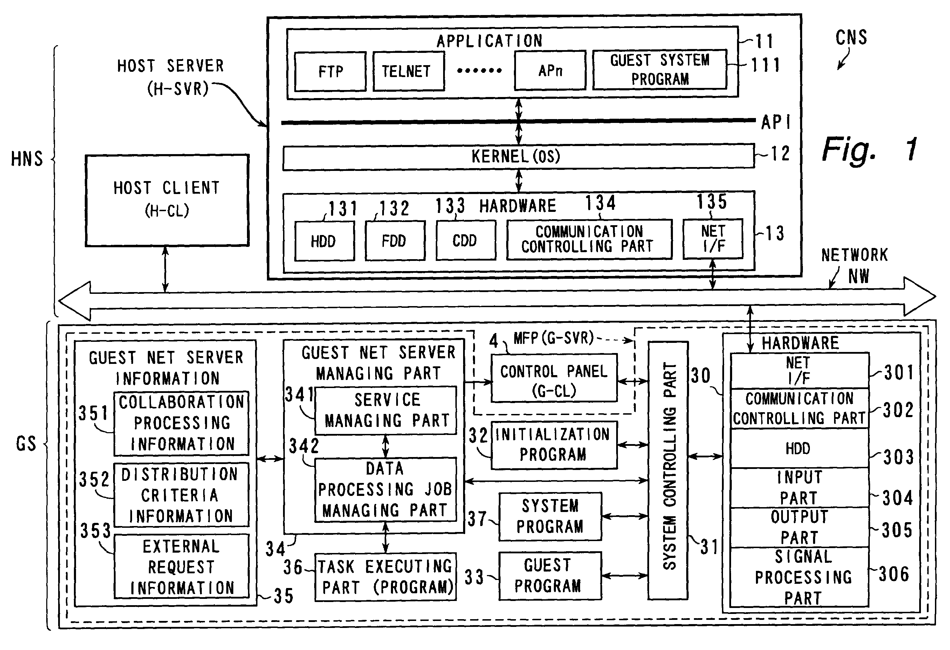

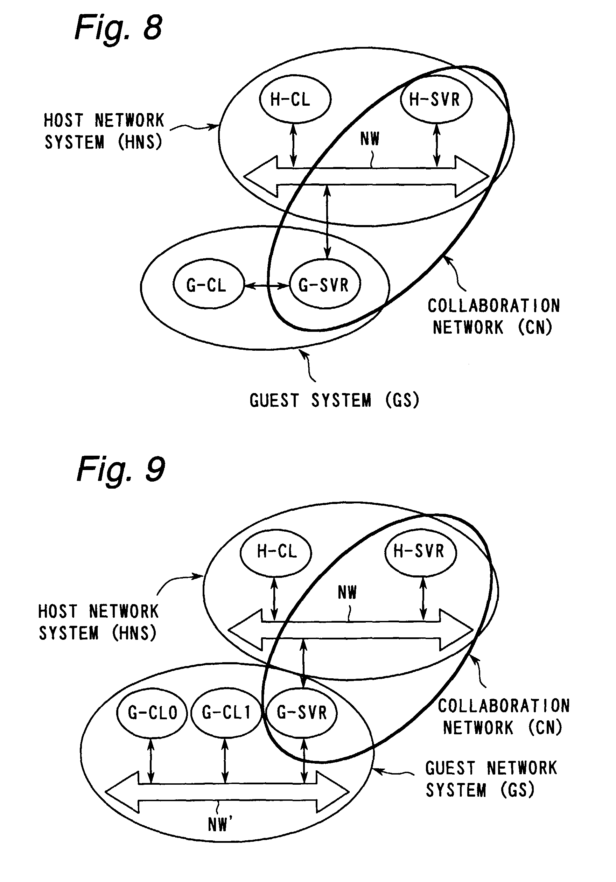

First of all, a basic concept of a collaboration network according to the present invention is described by referring to FIG. 8 , FIG. 9 and FIG. 10. Thereafter, an embodiment of the collaboration network according to the present invention is described in detail by referring to FIG. 1 to FIG. 7. Note that, under collaboration network system (CNS) environment, a network system to be connected is defined as a host network system (HNS), and a connecting system as a guest system (GS).

By referring to FIG. 8, a description is now made on a case where a hardware system solely functioning as a client is connected to an already-existing client server network system to construct a collaboration network. In the drawing, a host network system HNS includes a host client H-CL connected to a host server H-SVR via a network NW. A guest system GS includes a guest client G-CL integrated with a guest server G-SVR. The guest server G-SVR is connected to the network NW in the host network system HNS to form a complete collaboration network CN with the host server H-SVR, the network NW, and the guest server G-SVR.

In this manner, by additionally connecting the guest system GS to the already-existing host network system HNS, the guest server G-SVR executes its own service acquisition function so as to detect a service function available for the guest server G-SVR in the host server H-SVR (hereinafter, referred to as host server function). That is, when the guest server G-SVR is connected, the host service function service-disclosed by the host server H-SVR is added to the guest server G-SVR. The detected host server function is added to a basic function possessed by the guest server G-SVR to generate a new service function, and the new service function is executed in the collaboration network CN.

The collaboration network CN having such a new and unique environment under which systems are closely working together, and executing the new service function is dynamically constructed between the servers H-SVR and G-SVR in the respective systems, and is also automatically or arbitrarily updated. In other words, if any change in the service function is observed in the host network system HNS, the guest server G-SVR detects the change in the service function by its own service information acquisition function once again, and the service function is updated to a new one. In the new service function, tasks relevant to the basic function of the guest server G-SVR are executed on the guest server G-SVR side, while tasks relevant to the host server service function are executed on the host server H-SVR side. Further, the tasks to be executed are allocated between the guest server G-SVR and the host server H-SVR in accordance with a predetermined distribution criteria stored in distribution criteria information possessed by the guest server G-SVR.

The new service function which becomes available at the time of the guest system GS's connection is stored on the guest server G-SVR side as collaboration processing information after a procedure to process tasks, in other words, a program for every task in the guest server G-SVR and the host server H-SVR being optimized for every lob. Thereafter, in response to a job request from the guest client G-CL, the tasks are shared and respectively executed between the guest server G-SVR and the host server H-SVR in accordance with the aforementioned procedure.

The host server H-SVR is provided with a service-disclosure function to process in a collaboration manner. The guest server G-SVR is provided with a function of offering a new service function. The new service offering function combines a basic function and a service-acquired function by utilizing an execution program realizing the basic function, distribution criteria information including a description of the basic function, service information acquisition function, and distribution criteria information to put a new service function available. In addition, the host server H-SVR may be further provided with an expanded function (execution program) other than the basic function of the guest server G-SVR. Any expanded function to be provided is registered in the service disclosure function of the host server H-SVR.

In the construction process of the collaboration network CN, the distribution criteria of tasks provided by the guest system GS and the service functions possessed by the host network system HNS are referred to, and then the mechanism of collaboration processing is provided to the host server H-SVR. Further, the host network system HNS is provided with the execution programs to be shared. The distribution criteria of the tasks is for distinguishing between the tasks (execution program) executed by the guest system GS itself and the tasks (execution program) executed by the resources other than the guest system GS.

In the construction process of the collaboration network CN, the guest server G-SVR side determines a procedure (execution of tasks) how a particular function (JOB) is executed in the respective systems, and then stores the procedure as collaboration processing information in a memory thereof. In accordance with this collaboration processing information, the guest system GS and the host network system HNS work together to run a processing program.

The user can request the respective servers acknowledged by every client for a predetermined service without noticing the collaboration network CN. That is, the collaboration network CN is invisible from the clients H-CL and G-CL of the respective host and guest systems for a functional reason. In this example, as the guest system GS is a hardware system, the guest system GS is previously provided with a software for constructing the collaboration network CN. This software includes an execution program realizing the basic function on the guest server G-SVR side, the distribution criteria information including a description of the basic function, and the service acquisition function. Note in this example that a client server system is exemplarily described as the host server H-SVR, however, the description herein is also applicable to the host server H-SVR without the host client H-CL.

By referring to FIG. 9, a description is now made on a case where the client server network system as a client is connected to the already-existing client server network system so as to construct a collaboration network system CNS. In this example, a guest network system GNS substitutes for the guest system GS shown in FIG. 8. Further, in the example shown in FIG. 8, the software for constructing the collaboration network in the guest system GS is previously provided. While in the network system in this example, the software for constructing the collaboration network is not provided in the network systems. In this sense, two network systems of HNS and GNS are merely connected in a peer-to-peer manner. Strictly speaking, the network systems of HNS and GNS in this example are thus not equal to the host network system HNS and the guest network system GNS defined in the collaboration network system CNS.

In other words, the guest network system GNS is a network system in which a function of offering a new service function is provided as means of constructing a mechanism for realizing a collaboration processing environment. The new service offering function combines the basic function of the guest server G-SVR and the service-acquired service function of the host server H-SVR by utilizing the execution program realizing the basic function to be executed on the guest server G-SVR side, the distribution criteria information including the description of the basic function, the service information acquisition function of acquiring the service information available on the host server H-SVR side, and the distribution criteria information to put a new service function available. And, the guest network system GNS is connected to the host network system HNS. By connecting the guest network system GNS to the host network system HNS, the collaboration network system CNS can be constructed in a similar manner to the one shown in FIG. 8.

As will be known from the above, the collaboration network CNS can be constructed in any system (a network system included). The collaboration network system CNS is a generic name for the host network system HNS and the guest network system GNS constructing the collaboration network CNS.

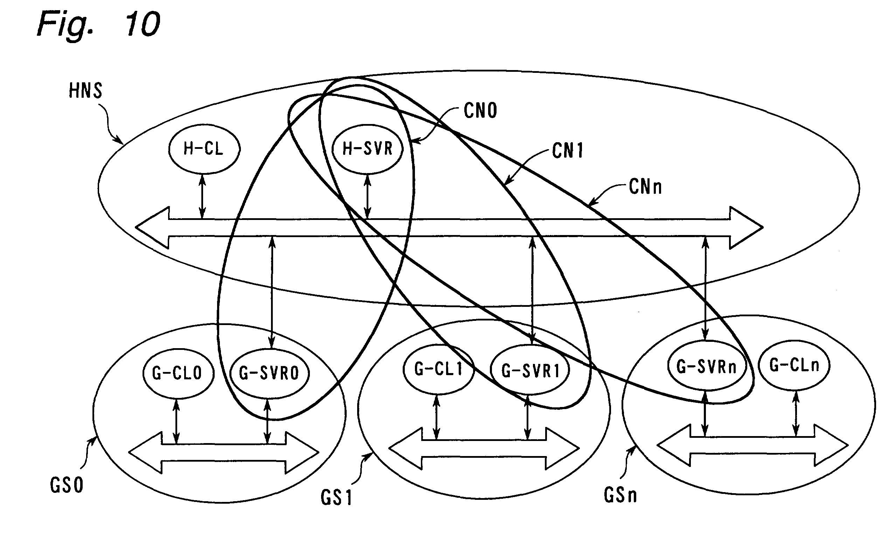

By referring to FIG. 10, a description is now made on an example in which a plurality of guest network systems are connected to a single host network system HNS so as to construct a plurality of collaboration network systems CN. Between a particular server H-SVR of the host network system HNS and a plurality of guest systems GS0 to GSn, n pieces of collaboration networks CN0 to CNn (where n is a positive integer including 0) can be separately formed. That is, n pieces of collaboration networks CN0 to CNn can be realized by providing a particular host server H-SVR with collaboration processing information shared with the plurality of guest systems GS. In a case where a common processing is executed among the plurality of guest systems GS0 to GSn, the resources registered in the host server H-SVR can be advantageously shared.

Furthermore, the guest systems GS0 to GSn constructing the collaboration networks CN0 to CNn with the host server H-SVR can communicate with each other. This can be realized by providing the host server H-SVR with managing means which causes n pieces of multi-structured collaboration networks CN0 to CNn to work together. In this manner, for example, a resource of the guest system GS1 becomes available for the guest system GS0. When n pieces of guest systems GS0 to GSn connected to the host network system HNS are constructing the collaboration networks CN0 to CNn with a single host server H-SVR, the resources possessed by the respective guest systems GS0 to GSn can be shared between the other guest systems GS.

By referring to FIG. 1, a description is now made on the embodiment of the collaboration network system according to the present invention. In this example, the multi-function-peripheral MFP described in FIG, 8 is connected to the host network system HNS as the guest system GS to construct the collaboration network system CNS. First of all, the structure of the host server H-SVR to which the guest system GS is connected is described. The host server H-SVR includes an application part 11 storing application programs required to execute various jobs in the host network system HNS, an application program interface API, a kernel 12 as OS of the network system, and a hardware 13. In the application part 11 in which various programs such as FTP, TELNET, and APn are previously stored, a guest system program storing part 111 storing a program for detecting a connection of the guest system GS to communicate therewith is further provided.

The application program interface API is a collective of commands coordinating between the application layer 11 and the kernel 12. When running the stored program, the application layer 11 sends a system call required to run the program to the application program interface API. The kernel 12, in response to the system call received via the API, activates a device driver of a necessitated device so as to control the hardware 13. Specifically, various application programs incorporated into the application layer 11 (the guest program 111 included) communicate via the kernel 12.

The hardware 13 includes various types of hard disk drive (HDD) 131, floppy disk drive (FDD) 132, CD drive (CDD) 133, communication controlling part 134, network interface (NET I/F) 135, and other arbitrary devices necessary for the host server H-SVR. The hard disk drive 131 reads and writes data from/to a hard disk. The floppy disk drive 132 reads and writes data from/to a floppy disk. The CD drive 133 reads data from a compact disk. The communication controlling part 134 controls various types of communication protocols. The network interface 135 is for connecting to a network NW such as LAN. The client H-CL is constructed by a personal computer (PC).

The multi-function-peripheral MFP which is the guest server G-SVR includes a hard ware 30, a system controlling part 31, a control panel 4, an initialization program storing part 32, a guest program storing part 33, a guest net server managing part 34, a guest net server information storing part 35, a task execution part 36, and a system program storing part 37. The system controlling part 31 runs a system program stored in the system program storing part 37 so as to control the hard ware 30, the guest net server managing part 34, and the initialization program storing part 32 in the guest server G-SVR. The task execution part 36 is constructed by the task execution programs realizing a basic function of the multi-function-peripheral MFP.

The initialization program storing part 32 stores a program necessary to set up a collaboration processing environment including a service executed in the host network system HNS. Specifically, the initialization program storing part 32 stores programs such as a program for establishing a communication channel with the host server H-SVR, an initialization program for the host server H-SVR, an activation program.

The guest program storing part 33 stores a program to be executed in the host server H-SVR as an expanded function for the basic function of the guest server G-SVR.

The guest net server managing part 34 determines distribution of tasks between the resources of the host network system HNS and the guest system GS for every job. The guest net server managing part 34 registers the functions executable in the control panel 4. In response to the registration, the control panel 4 displays corresponding functions and sets an operational environment. As a result, the user can be informed of the latest functions and operational environment. The guest net server information storing part 35 stores information on tasks to be shared between the MFP being the guest server G-SVR and the host server H-SVR.

The hardware 30 includes a network interface (NET I/F) 301, a communication controlling part 302, a hard disk drive (HDD) 303, an input part 304, an output part 305, and a signal processing part 306. The network interface 301 is connected to the host network system HNS through the network NW. The input part 304 is a data input device such as a scanner, and the output part 305 is a data output device such as a printer. The signal processing part 306 handles various types of data correction, and the hard disk drive 303 stores various types of data such as data inputted from the input part 304, for example. The communication controlling part 302 controls various types of communication protocols so as to enable the network interface 301 to communicate with devices connected to the network NW.

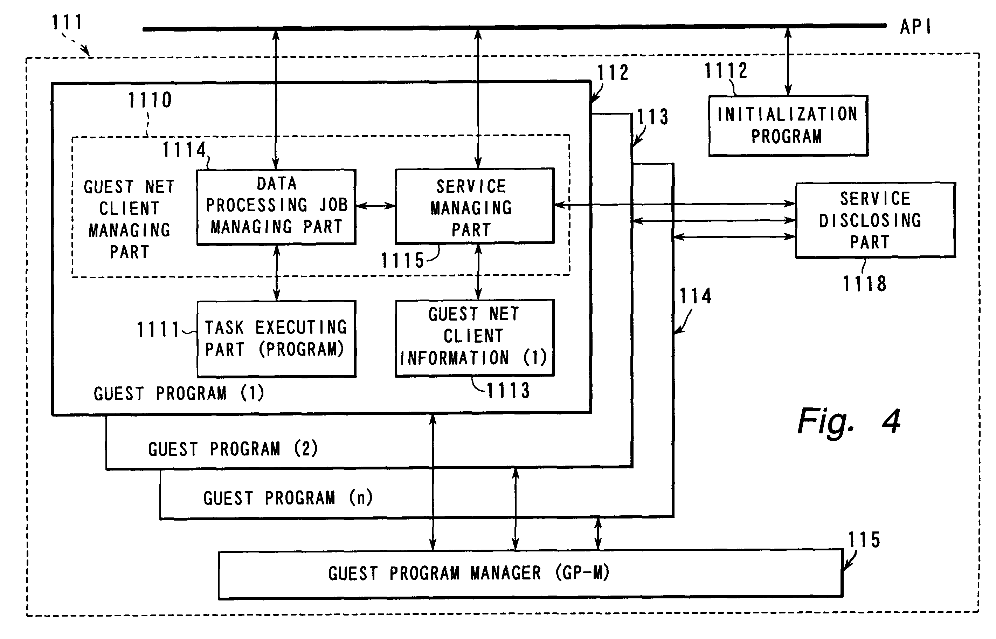

When the multi-function-peripheral MFP is connected to the network NW by the user for the first time, the system program stored in the system program storing part 37 in the guest system GS manually or automatically starts the initialization program stored in the initialization program storing part 32 so as to set up the collaboration processing environment including the services in the host network. Specifically, a communication channel with the host server H-SVR is established via the system controlling part 31 and the network interface 301, and then the initialization program stored in the initialization program storing part 32 is downloaded to an initialization program storing part 1112 (FIG. 4) in the guest system program storing part 111 in the application layer 11 of the host server H-SVR by using FTP, or the like. Thereafter, the downloaded initialization program (in the initialization program 1112) is started by using TELNET, or the like.

When the initialization program (in the initialization program 1112) is started, the host server H-SVR transfers a necessitated program including a library of process tasks executing an internal expanded function of a guest program stored in the guest program storing part 33 to the guest system program storing part 111 (112, 113, or 114). Note that, instead of being transferred from the guest program storing part 33 of the multi-function-peripheral MFP, the guest program may be read from a stored recording medium which pre-stores the guest program such as a CD to the CD drive 133 of the host server H-SVR, and then is stored in the guest system program storing part 111. Further, needless to say, a storage medium for the guest program is not limited to the CD media, however, other recording media capable of being read with the host server H-SVR such as optical disks, magnetic disks, magneto-optic disks may also be sufficient.

The initialization program 1112 receives server initialization information of the processing program registered in the host server H-SVR, and then registers the same to the guest net client information. The guest net server managing part 34 judges a multi-function-peripheral MFP registration function and external request processing possessed by the multi-function-peripheral MFP in accordance with the server initialization information of the host server H-SVR and distribution criteria information reserved in the distribution criteria information storing part 352 in the guest net server information storing part 35 in the multi-function-peripheral MFP, and generates collaboration processing information (351) distributing tasks for every job according to a predetermined format, and then stores the same in the collaboration processing information storing part 351.

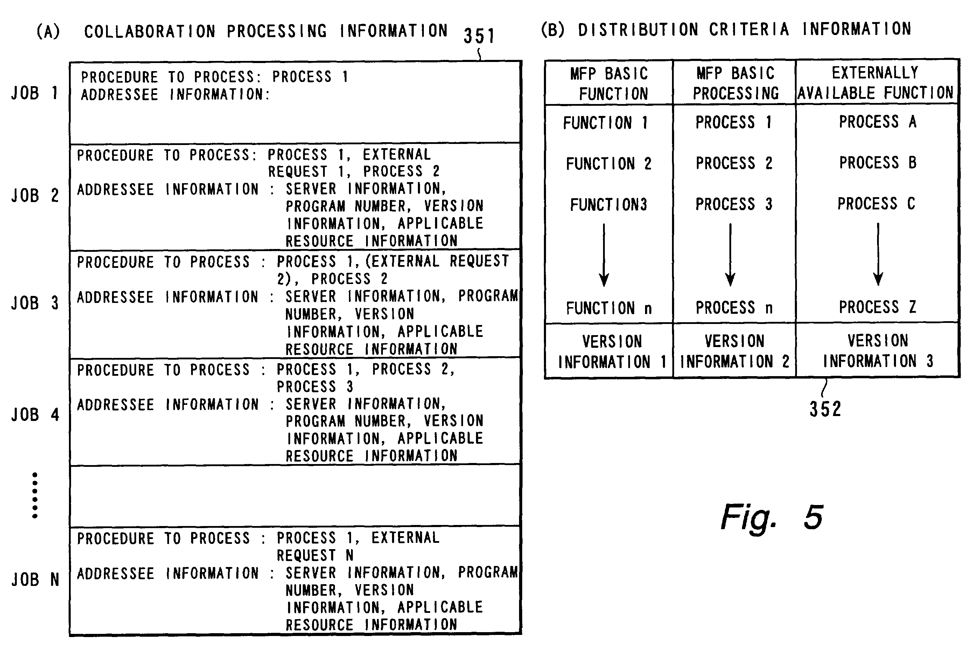

As shown in (A) Collaboration Processing Information in the left part of FIG. 5, the collaboration processing information 351 includes a procedure to process tasks, for every job, and addressee information (server information, program number, version information, applicable resource information). The server information includes IP address, server name, applicable protocol information of the host server H-SVR, for example. The program number denotes an address existing in the program available by the server. The version information includes available service and program version. The applicable resource information tells which device and resource in the host network system HNS will be used.

After the functions to be executed by the multi-function-peripheral MFP are confirmed, the guest net server managing part 34 automatically registers the functions executable in the control panel 4. In response to the registration, the control panel 4 displays corresponding functions and sets an operational environment. Consequently, the user is informed of the latest functions and operational environment. The procedure to process, information on server 1 (host server H-SVR) requesting the processing, processing program number, and the collaboration processing information (351) including version for realizing functions (JOB) performed in the multi-function-peripheral MFP, are transmitted in response to a request from the host server H-SVR.

As shown in (B) Distribution criteria Information in the right part of FIG. 5, the distribution criteria information stored in the distribution criteria information storing part 352 includes the basic function possessed by the multi-function-peripheral MFP, information on the basic processing and version thereof as the information peculiar to the multi-function-peripheral MFP, which are found first. The available functions offered by the host server H-SVR are sequentially registered as externally-available functions. The expanded function is considered an initial-externally-available function.

In this manner, the control panel 4 can add to a display menu and display a designated area so as to display/designate the contents of registration added by the guest net server managing part 34 as an expanded function. It is desirable that the control panel 4 is provided with a touch panel mounted on a liquid crystal display panel to flexibly deal with the functions. Also, it is desirable to make the popular functions available at the touch of a KEY button. When the processing program provided in the host server H-SVR or the processing program of the multi-function-peripheral MFP is upgraded or altered, or the state of system is altered (disorder or disfunction of the host server H-SVR, for example), the guest net server information managing part 34 updates display of the operation manner and an input function of the control panel 4, and limits the functions to the ones executable only in the multi-function-peripheral MFP so as to allow display of the operation manner and the input function.

When the collaboration processing information (351) is once generated, the service managing part 341 in the guest net server managing part 34 monitors the state of system at predetermined time intervals. When any change of state is observed, new collaboration processing information (351) is exchanged between the multi-function-peripheral MFP and the host server H-SVR once again so as to update the shared information. Further, when any change of state of the system (such as failure or disfunction of the host server H-SVR) is observed, the guest net server managing part 34 updates display of the operation manner and an input function of the control panel 4, and limits the functions to the ones executable only in the multi-function-peripheral MFP so as to allow display of the operation manner and the input function. In this manner, ease of maintenance and handling a change of state of the system is achieved.

In the multi-function-peripheral MFP, when the service managing part 341 judges that, in response to a service request from the client H-CL of the host network system HNS, the service is not available, the service managing part 341 searches for any service available by the host network by using its own service search function. If any service available for the service request from the client H-CL is found in the net, the service is taken in and then the service requested by the client H-CL is executed.

If none of the services in the host network is available in the net with the service search function, the client H-CL is notified that no service is available and then the processing is terminated.

When the control panel 4 on the multi-function-peripheral MFP side issues a job request such as copy, FAX, enlarging/reducing, filing, an application task corresponding thereto is activated so as to start the processing. In response to a job request, for example, an application task corresponding thereto is activated so as to request the data processing job managing part 342 for real processing. The data processing job managing part 342 obtains information on tasks to be shared between the multi-function-peripheral MFP and the host server H-SVR from the collaboration processing information 351 in the guest net server information storing part 35, judges, in accordance with the information, the processing executed on the multi-function-peripheral MFP side, the processing executed on the host server H-SVR side, and the processing executed by both the multi-function-peripheral MFP and the host server H-SVR, and then manages and requests the relevant tasks according to the designated sharing procedure.

In a case where the processing executed on the host server H-SVR side and the processing executed by both the multi-function-peripheral MFP and the host server H-SVR are in need, external request information (353) is generated in accordance with a format described in an external request information storing part 353 in the guest net server information storing part 35. Thereafter, the external request information (353) is passed to the host server H-SVR working together so as to execute and manage tasks while having a single job operate in a coordinated manner.

FIG. 4 shows the detailed structure of the guest system program storing part 111 incorporated into the application part 11 of the host server H-SVR. In an initial stage of constructing the collaboration network system CNS, first of all, a service disclosing part 1118 disclosing any service available by the host server H-SVR is incorporated into the guest system program storing part 111. Thereafter, an execution program being a library of process tasks executing an expanded function is incorporated from the guest program storing part 33 of the guest server G-SVR to the task executing part 1111 in the guest program 112 (113, 114). A service function disclosed in the service disclosing part 1118 is stored in the guest net client information storing part 1113. Further, a service managing part 1115 having a search function for searching any already-existing service in the host network system HNS is incorporated into the guest net client managing part 1110 in the guest program 112.

Moreover, guest program storing parts 113 and 114 are provided, which dynamically manage an additional guest system GS (two systems in this example) to be incorporated into the host server H-SVR in a coordinated manner. A guest program manager (GP-M) 115 is also provided, which manages these guest program storing parts 113 and 114.

In the host server H-SVR, the guest net client managing part 1110 requests the data processing job managing part 1114 for a desired process task in accordance with the procedure to process tasks, acquired data information (size, format, attribute, for example), MFP information (client name, program number, version, for example) included in the external request information (353) from the multi-function-peripheral MFP. Also, the host server H-SVR stores the data received from the multi-function-peripheral MFP in a memory which is its own resource. The data processing job managing part 1114 executes the requested task by using the task executing part 1111.

By taking a copy request as an example with reference to FIG. 1 and FIG. 5, operations in the respective parts are described in detail. In response to a job request of copying (JOB1) from the control panel 4, an application task of copying is first activated so as to request the data processing job managing part 342 for real processing. Herein, no matter which application task is activated, the activated application task never fails to request the data processing job managing part 342 for real processing.

The data processing job managing part 342 judges from the collaboration processing information (351) included in the guest net server information (35) that copying (JOB1) can be sufficiently done only with a task of Process 1, and thereafter has the task of Process 1 in the task executing part 36 execute the process. The task of Process 1 reads a manuscript in the input part 304 (scanner, for example), subjects the image to image processing in the signal processing part 306 included in the hardware, and then prints the processed image result by the output part 305 (printer). The task of Process 1 notifies the data processing job managing part 342 that the service is terminated, the data processing job managing part 342 notifies the application task of copying the termination, and then the application task of copying notifies the control panel 4 that the job is terminated. This is the end of the operation of copying.

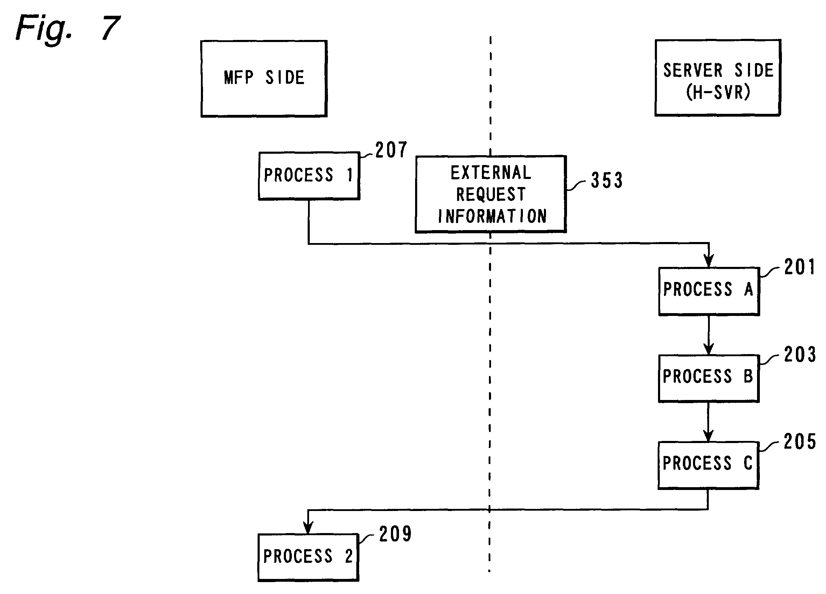

By taking filing as another example with reference to FIG. 7, task distribution and sequence of execution are briefly described. In FIG. 7, in accordance with a procedure to process the collaboration processing information (351), the data processing job managing part 342 has the multi-function-peripheral MFP side execute a task of Process 1 (207). Next, the data processing job managing part 342 describes external request information (353) so as to request the host server H-SVR to process the task.

The data processing job managing part 1114 on the host server H-SVR side, in accordance with the procedure to process the task described in the external request information (353), sequentially executes Process A (201), Process B (203), and Process C (205). Thereafter, the processing result is given to the data processing job managing part 342 on the multi-function-peripheral MFP side.

The data processing job managing part 342 in the multi-function-peripheral MFP executes Process 2 (209) in accordance with the procedure to process the collaboration processing information 351.

Hereinafter, the example of filing is described in detail by referring to FIG. 1, FIG. 4, and FIG. 7. In response to a filing job request (JOB2) from the control panel 4, the system program in the system program storing part 37 first activates an application task of filing, then requests the data processing job managing part 342 in the guest net server managing part 34 for processing via the system controlling part 31.

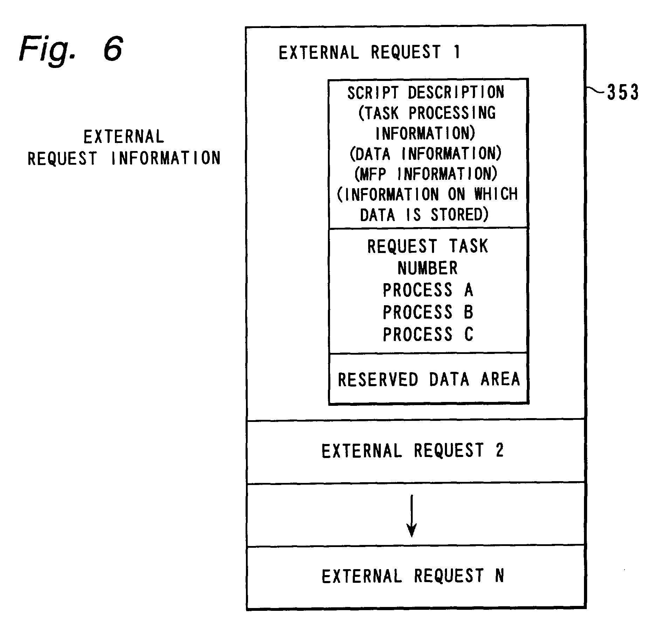

The data processing job managing part 342 judges from the collaboration processing information 351 included in the guest net server information (35) that filing (JOB2) can be sufficiently done with the Process 1 of the task executing part 36 and the process task of the host server H-SVR, and thereafter has the task of Process 1 executed in accordance with the procedure. The task of Process 1 reads a manuscript in the input part 304 (scanner, for example), then passes the result to the data processing job managing part 342. The guest net server managing part 34 writes the procedure to process tasks executed in the host server H-SVR, request task number, read image data, and the like in accordance with the predetermined request format shown in FIG. 6 into a script for the data processing job managing part 342, then requests the host server H-SVR as the external request information 353.

The host server H-SVR side sends execution information to an execution processing program of a program number designated by the external request information (353). The execution processing program stores image data in the received information into a memory, at the same time, provides the data processing job managing part 1114 with a procedure to process, data information, task number, and MFP information (client name, port number, version) in accordance with the stored address and the description of script. The data processing job managing part 1114 sequentially executes Process A (201), Process B (203), and Process C (205) in accordance with the procedure, and then passes the result to the port number in which the data processing job managing part 342 of the client obtained from the MFP information is existed.

Herein, for example, Process A executes processing for layout analysis, Process B takes out character string(s) from the layout analysis, and Process C treats the taken-out character string(s) with OCR processing so as to add INDEX as a key word to image data. The image data provided with INDEX is stored in HDD 131 of the host server H-SVR as a file. This storage file can be referred to from both host client H-CL and a Web browser of another Mth client in the host network system HNS (not shown). Further, by previously setting the host client H-CL as a storage client of data, filing can be automatically stored in a hard disk of the host client H-CL.

Consequently, the data processing job managing part 342 on the multi-function-peripheral MFP side receives INDEX information, then subsequently executes a task of Process 2.

In the task of Process 2, INDEX is provided with server name, and server managing number, and then stored in a memory as memo information. Simultaneously, the information is developed in bar code image so as to print by output means. By having the input means read the printed paper once again, the image data already filed in the host server H-SVR can be called out again to print. In a similar manner, by offering the user an opportunity to select and designate desired image data with displayed memo information stored in the memory by the control panel 4, the already-filed image data on the server side can be called out to print.

In the task of Process 2, the data processing job managing part 342 is notified that the service is terminated, and then notifies an application task of filing of the termination. Thereafter, the application task of filing notifies the control panel 4 that the job is terminated. This is the end of the operation of filing. Herein, Process A, Process B and Process C are all processed in a single resource inside the device, a process substance (image data) thus does not move within a single memory space. In this manner, the processing is executed by passing a pointer of existing address, and resultantly rather high-speed processing can be achieved.

As will be known from the above, processing of tasks can be intensively done by executing the processing in accordance with the script-described external request information (353). The processing of tasks can be varied in combination depending on description of script. Therefore, the resource of host server H-SVR can be efficiently utilized. In this example, tasks of expanded function incorporated into the host server H-SVR side are described. However, if any service function available by the host network system HNS is described in the external request information 353, the available service function(s) is utilized by the service managing part 1115. Therefore, the data processing job managing part 1114 can be incorporated into the executing sequence. In this manner, the service function available by the host network system HNS can also be efficiently utilized.

By referring to FIG, 1 and FIG. 5 again, a job request externally made from the multi-function-peripheral MFP is described. The job request can be made from not only the control panel 4 but from the client H-CL connected to the host network. Hereinafter, printing is exemplarily described. When the service managing part 341 mounted in the multi-function-peripheral MFP is called from the Web browser of client H-CL, the service managing part 341 sends supported service information in HTML format and an applet of Java script. When a printer to be displayed is designated by the contents of service, supported emulation information is displayed. Note that the Web browser of client H-CL designates printing of file in a PostScript format.

In the multi-function-peripheral MFP, in a similar manner to the control panel 4, a print application task of the system program (37) is activated responding to a print job request (JOB 3) so as to request the data processing job managing part 342 for real processing.

The data processing job managing part 342 judges from the collaboration processing information (351) of guest net server information 35 that printing (JOB 3) can be sufficiently processed by Process 3 and the process task of host server H-SVR. In this example, the multi-function-peripheral MFP is provided only with a printing function of raster data, but not emulation by a page-description language such as PostScript and PCL. However, as the host server H-SVR supports emulation of PostScript and PCL, a file can be converted from the PostScript into raster data. Therefore, the output part 305 of the multi-function-peripheral MFP can print by using the raster data.

In accordance with the collaboration processing information (351) of procedure to process, first of all, the data processing job managing part 342 writes the procedure to process processing programs (tasks) executed on the host server H-SVR side, request processing program (task) numbers, and the like in accordance with the predetermined request format into a script by treating a print file in PostScript received from the client in the host network as process data so as to request the host server H-SVR as the external request information (353) via the network interface 301.

On the host server H-SVR side, a process task designated by the external request information (353) is sent to the data processing job managing part 342. The data processing job managing part 342 stores a Postscript file in the received information into a memory, and at the same time, analyzes information on the procedure to process, data information, task number, and MFP information (client name, program number, version) in accordance with the stored address and the description of script. Thereafter, the data processing job managing part 342 executes Process D according to the procedure, and passes the result to the multi-function-peripheral MFP. Herein, for example, Process D executes processing to convert the PostScript file into a file in which raster data can be processed, and then passes the raster data file as a result. The data processing job managing part 342 of the multi-function-peripheral MFP prints the returned raster data file in the output part 305 by using the task of Process 3.

In the task of Process 3, the data processing job managing part 342 is notified that the service is terminated, then the data processing job managing part 342 notifies a print application task of the termination. Thereafter, the print application task notifies the client H-CL that the job is terminated. This is the end of the operation of printing.

The user can use the multi-function-peripheral MFP as a PostScript printer remotely from the client H-CL (PC) without noticing the host server H-SVR. Although the multi-function-peripheral MFP is not provided with emulation of PostScript, the resource of host server H-SVR and the function thereof help the multi-function-peripheral MFP execute the processing in a similar manner to the PostScript printer.

The multi-function-peripheral MFP described in this example monitors at all times a change of state of the host network system HNS and service function(s) available therein by using the service managing part 341 of the guest server managing part 34. When a service function available on the host server H-SVR side is altered in such manner that emulation language included in the printer functions is added or upgraded, update information indicating how the service function was updated is transferred from the service disclosing part 1118 to the multi-function-peripheral MFP. The service managing part 341 of the guest server managing part 34 on the multi-function-peripheral MFP side receives the update information so as to update the collaboration processing information (351). Right after the collaboration processing information (351) is updated, a new service function becomes available in the multi-function-peripheral MFP side.

As will be clear from the above, the mechanism for automatic updating mounted in the multi-function-peripheral MFP makes it possible to deal with new service functions and upgrading without updating the system program, and ease of maintenance is achieved. Furthermore, with functions of automatically incorporating and updating the available service function, the latest service function in the host network system HNS can be put available from the multi-function-peripheral MFP side. In this manner, the user does not need to alter the setting of environment of the host network system HNS or to update the system program in the multi-function-peripheral MFP in response to services updated in the host network system HNS. In addition, when incorporating the service function in the host network system HNS, the collaboration processing information 351 is updated in such manner that the capability of resource is to be of maximum benefit. Therefore, the resource can be highly utilized, and accordingly performance as a system can be easily improved to reach full potential thereof without imposing any load on the user.

In a case where the host system is provided with a second multi-function-peripheral MFP (GS1), a third multi-function-peripheral MFP (GS2) or (n+1)th multi-function-peripheral MFP (GSn), the respective multi-function-peripheral MFPs can equally access to the resources by constructing the combined collaboration network system as shown in FIG. 10. In this manner, the respective multi-function-peripheral MFPs can share a font resource and an emulation function of various languages. The multi-function-peripheral MFPs do not have to separately possess the font resource and the emulation function of various languages, thereby suppressing hardware cost low. As a result, a low-cost hardware with high performance can be achieved.

Note that a software constructing the aforementioned collaboration network is an application, and can be installed onto any OS in Windows 98, 95/NT (trademarks of Microsoft, USA), Tron, UNIX. Further, the software can be realized by having an intermediate language such as Java operate on a predetermined virtual machine, and thus has no dependence on OS. Specifically, in the collaboration network system CNS according to the present invention, the guest system GS or the guest network system GSN is at liberty to use the host network system HNS and the resource thereof as an infrastructure.

A multi-function-peripheral MFP may include a portable-type such as PDA or DSC (Digital Still Camera) in which the input part 304 is a camera and the output part 305 is a liquid crystal display. A portable-type FAX may also be included. In a notebook PC, the output part 305 may be an HDD, and the input part 304 may be a keyboard. Also, a telephone in which the input part 304 is voice-activated may be included. The collaboration network system can be realized in any device or system. And when incorporating service function(s) thereto, the collaboration processing information 351 is updated in such manner that the capability of resource is to be of maximum benefit. Therefore, the resource can be highly utilized, and accordingly performance as a system can be easily improved to reach full potential thereof without imposing any load on the user. In any device, it is possible to realize a collaboration network system constructing its own system which manages functions in a collaborated manner in an already-existing network.

As will be known from the above, according to the multi-function-peripheral MFP to which the collaboration network system of the present invention is applied, it is easy to expand basic functions by expanding processing programs provided for the host server H-SVR.

Further, the guest server G-SVR is provided with a function of monitoring a change of state in the host network system HNS and service function(s) available therein at all times by using the service managing part 341. When any change in the available service function is observed, the service managing part 341 of the guest net server managing part 34 in the multi-function-peripheral MFP updates the collaboration processing information 351. Right after the collaboration processing information 351 is updated, a new service function is put available. In this manner, the user can easily use the multi-function-peripheral MFP with the latest information at hand.

When incorporating any available service function and expanded function, the multi-function-peripheral MFP and the host server H-SVR can respectively control a task level. Therefore, exchanging of data among various resources, in other words, the number of communication becomes less frequent. Consequently, the requested job can be executed without causing a drop in performance of the entire system. The multi-function-peripheral MFP is only provided with basic function(s) thereof, but can work together with high-performance processing program(s) available by the host server H-SVR. Accordingly, a low-cost device with high-performance service can be achieved.

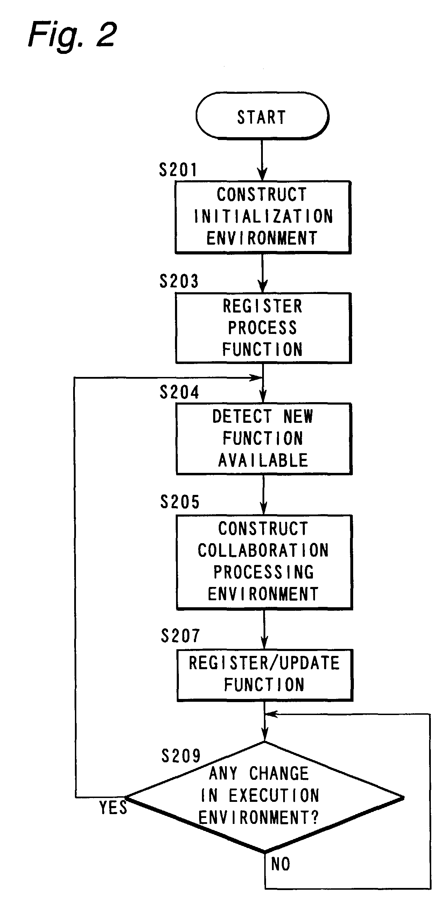

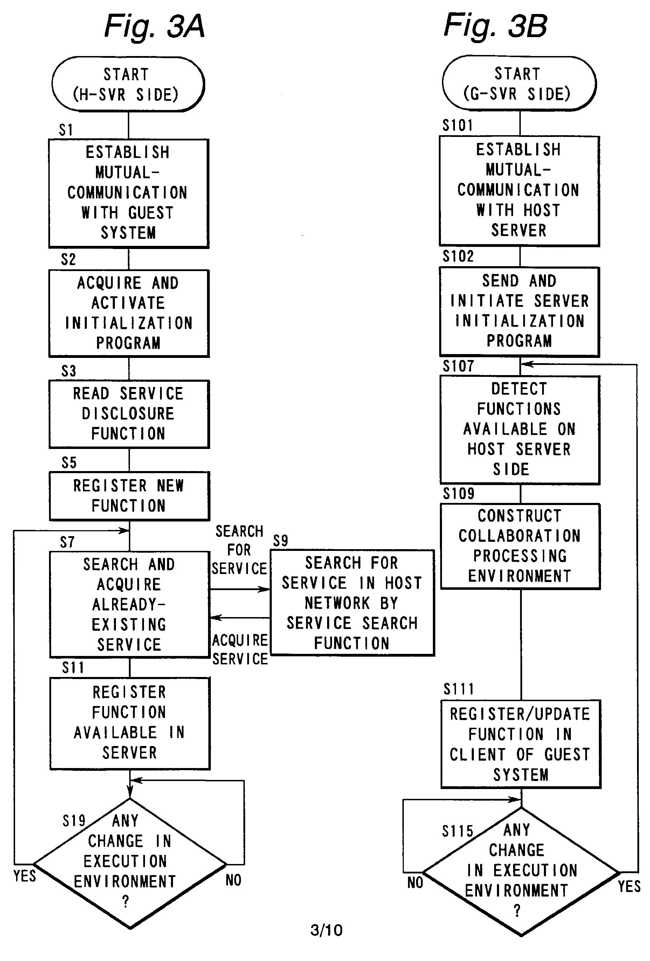

By referring to FIG. 2, a method of constructing the collaboration network system is briefly described. When the guest system GS or the guest network system GNS is connected to the hot network system HNS, first of all,
in step S201 (corresponds to steps S1 to S2 in FIG. 3), a mutual-communication environment between the multi-function-peripheral MFP and the host server H-SVR is established, and then an initialization program for constructing an execution environment of program is activated.

In step S203 (corresponds to steps S3 to S11 in FIG. 3), a mechanism for collaboration processing is incorporated into the host server H-SVR side so as to construct the execution environment.

In step S204 (corresponds to step S107 in FIG. 3), a function put available from the service disclosure function on the host server H-SVR side is detected and acquired.

In step S205 (corresponds to S109 in FIG. 3), collaboration information such as registration of the execution program, generation and registration of the collaboration processing information 351 based on the distribution criteria information 352 is shared.

In step S207 (corresponds to S111 in FIG. 3), any available function is registered in the client of guest system GS based on the collaboration processing information 351. In this stage, a function relevant to collaboration processing is started.

In step S209 (corresponds to S19 and S115 in FIG. 3), any change of state in the systems having the collaboration network constructed therebetween is detected at predetermined time intervals, or arbitrarily detected by a command activated by the user. Also, a notification from the host server H-SVR side telling a change of state may be detected. After the step S209, steps S204 to S209 will be repeatedly executed when any change in the execution environment is observed.

Next, a construction sequence of the collaboration network system of the present invention is described. A method of incorporating an execution program and execution environment constructing the collaboration network system CNS may fall roughly into three ways as follows:
- The multi-function-peripheral MFP and the host server H-SVR are separately provided with the execution program and execution environment through a medium such as a floppy disk and CD. With the media, the user installs the execution program and execution environment respectively to the multi-function-peripheral MFP and the host server H-SVR.
- The execution program and execution environment are previously stored in the multi-function-peripheral MFP. While monitoring connection between the host server H-SVR and the multi-function-peripheral MFP, the host server H-SVR reads the execution program and execution environment from the newly-connected multi-function-peripheral MFP.
- When connected, the multi-function-peripheral MFP writes the execution program and execution environment into the host server H-SVR.

All the three aforementioned ways can be realized with the already-existing function(s) available by the network system. Herein, a case where an initialization program is provided from the guest system GS (multi-function-peripheral MFP), and a job execution program is put available to the host server H-SVR with a medium such as a CD is exemplarily described as one embodiment. Thereafter, by referring to FIG. 3, processing of installation to the host server H-SVR among the processing in the respective steps shown in FIG 2 is first described in detail.

In step S1, in response to an inquiry from the guest system GS, a monitoring program in the guest system program storing part 111 of the host server H-SVR returns conditions of communication to the guest server G-SVR. A communication channel is established between the guest server G-SVR and the host server H-SVR, and then the initialization program is transmitted from the initialization program storing part 32 to the initialization program storing part 1112.

In step S2, the initialization program (1112) is activated through the guest system GS. After that, the host server H-SVR exchanges information with the guest system GS according to the initialization program (1112).

In step S3, the host server H-SVR incorporates the guest program manager 115, the service disclosing part 1118, and the guest net client managing part 1110 from the CD. The task executing part 1111 to be executed as the expanded function is registered in a part subordinate to the data processing job managing part 1114 of the guest net client managing part 1110. Further, the guest system program storing part 112 is registered in the guest program manager GP-M115, and then can perform management with the guest system program storing part 113 and the guest system program storing part 114 to be registered.

In step S5, in the standard mode, any processing program necessary for realizing the expanded function is read from the CD, and the execution program (library of process tasks) is stored in the task executing part 1111. In the custom mode, the user selects necessitated function(s) so as to register a processing program. In the full system mode, every processing program is registered.

In step S7, the service managing part 1115 searches for any service function(s) available by the host network system HNS to acquire.

In step S9, the already-existing service information (HN service information) included in a device in the target host network system is searched and acquired by the service search function so as to register any new processing program other than the ones available on CD. For example, in addition to a first OCR function (processing program) available on CD, when a second OCR function executing the processing in a similar manner thereto is found in the network, the second OCR function can also be registered as one of the execution programs. In the custom mode, for example, if the user selects either the first OCR function or the second OCR function as desired, the selected OCR function is registered and executed as a processing program.

In step S11, the service managing part 1115 stores the processing program installed from the CD and the available service function(s) searched and acquired from the host network system HNS into the guest net client information storing part 1113 so as to pass the same to the service disclosing part 1118.

In step S19, the guest net client managing part 1110 starts a service to the guest system GS, and the service managing part 1115 detects any change of state in the systems having the collaboration network system constructed therebetween at predetermined time intervals. If there is any change of state, steps S7 to S19 are repeated so as to acquire the already-existing services and register the functions available by the server.

In this manner, the environment on the host server H-SVR side is completely constructed. Note in the aforementioned description that the initialization program is put available from the guest system GS, and the job execution program is put available to the host server H-SVR from the CD. In the standard mode, however, the job execution program necessary for share-processing with the guest system GS is only installed, thus it is known from the distribution criteria information (352) which job execution program should be installed in advance. Therefore, it is possible to provide the guest system GS (multi-function-peripheral MFP) with the guest program (33) in advance as shown in FIG. 1, and in response to a request from the host server H-SVR, a job execution program in need can be downloaded from the guest system GS to the host server H-SVR by using FTP, for example. Also, both of the guest system GS and the host server H-SVR may be provided with the initialization program. In either of these cases, functions available by the already-existing host network system HNS can be utilized to realize environment construction.

Next, environment setting on the guest system side is described. The initialization program is executed according to the following steps.

In step S101, when the power is turned on by connecting the guest system GS to the host network system HNS, the guest system GS activates the initialization program 32. Thereafter, by using a service of the monitoring program supported by the already-existing system (host server H-SVR), an address to which the host server H-SVR transmits is acquired so as to establish a communication channel by an already-existing protocol. After that, the established communication channel is used to exchange information and data.

In step S102, after the communication channel is established, the initialization program (1112) for the host server H-SVR possessed by the guest system GS is sent to the host server H-SVR by using a file transfer software such as FTP. Thereafter, the host server H-SVR is remotely system-logged in so as to activate a set-up program by using a command execution software such as TELNET.

In step S107, the service managing part 341 takes out available function information registered in the service managing part 1115 of the host server H-SVR from the service disclosing part 1118.

In step S109, the guest net server managing part 34 describes the available function information on the host server H-SVR side detected by the service managing part 341 in step S107 into the distribution criteria information storing part 352. Then the guest net server managing part 34 generates, in accordance with the resultantly-generated distribution criteria information (352), collaboration processing information (351) including information on procedure to process tasks of the execution program and addressee information. Further, the information is stored in the distribution criteria information storing part 352 as guest net server information (35) on the guest system GS side. In this stage, the guest system GS, with respect to the user, accepts a JOB request from the control panel 4 so as to start a service thereof.

In step S111, in accordance with the collaboration processing information (351) generated in step S109, function(s) executable are automatically registered and updated to the control panel 4. The control panel 4 displays corresponding functions and sets an operational environment according to the contents of registration. Consequently, the user is informed of the latest functions and operational environment.

In step S115, when any processing program as expanded function available from the host server H-SVR, service function available from the host network system HNS, and processing program as the basic function executed in the guest system GS are updated or altered, or when any change of system state (disorder of the host server, for example) is observed, display of the operation manner and an input function of the control panel 4 can be updated. In order to search for any change of state, the service managing part 341 monitors the system in which the collaboration network system is constructed at predetermined time intervals. If any change of state is observed, step S107 is repeated so as to acquire the services available from the host server H-SVR, generate new collaboration processing information, and update registered functions to the control panel 4.

By the update function of repeating steps S107 to S115, maintenance of hardware can be realized without imposing any load on the user, and the latest service functions in the host network system HNS can be taken in. Furthermore, the obtained resources are controlled to the task level for execution by utilizing the collaboration processing information 351, the resources scattered over the network thus can be combined to utilize the same to be of maximum benefit.

Moreover, when the guest system GS judges that the service is not available in response to the service request from the client H-CL of the host network, the service managing part 341 searches for any service available by the host network by using the service search function. If the service requested by the host client H-CL is found in the net, the service is taken in so as to execute the service requested by the host client H-CL. If the service requested by the host client H-CL is not found in the net, the host client H-CL is notified that the service is not available, then the process is terminated.

By referring to the detailed diagram of FIG. 4, an operation of the guest system program storing part 111 is described. An initialization program 1112 establishes a mutual-communication environment with the guest system GS. Further, the initialization program 1112 performs settings of the guest program manager GP-M 115 and the guest net client managing part 1110. Although it is not shown in the drawing, the guest program manager 115 also inclusively manages the guest program 112, guest program 113, and guest program 114 constructed by another guest system GS so as to put the resources between the collaborating systems available.

The functions possessed by the respective guest systems GS are acknowledged by the service managing part 1115, then the guest program manager 115 arbitrates the utilization of resources. Specifically, the resources of a plurality of guest systems GS connected to the collaboration network system CNS are optimized for organic use in an effective manner.

Further, the service managing part 1115 acquires any service function in the host network system HNS by its own service search function, and then works together with the data job managing means 1114 to utilize the resource thereof. The data processing job managing part 1114 accepts external request information 353 from the guest system GS so as to execute the requested job by using the task executing part 1111 and the service managing part 115. Moreover, the guest net client information (1113) stores available function information provided by the host server H-SVR. The service disclosing part 1118 acquires guest net client information from the service managing parts 1115 of the respective guest programs 112, 113 and 114 (service managing parts of the guest programs 113 and 114 being not shown have the identical function to the service managing part 1115) registered in the guest system program storing part 111, and then discloses available services in response to the request from the guest system GS.

While the invention has been described in detail, the foregoing description is in all aspects illustrative and not restrictive. It is understood that numerous other modifications and variations can be devised without departing from the scope of the invention.

## Claims

1. A collaboration network system (CNS) in which a first system (H-SVR) operating in accordance with a first sequence is connected to a second system (GS) operating in accordance with a second sequence, and said second system (GS) primarily executes a sequence operation while utilizing a resource of said first system (H-SVR),
said first system (H-SVR) comprising
an interface means (111) incorporated into an application layer (11) executing said first sequence,
said second system (GS) comprising:
a distribution criteria storing means (35) for storing distribution criteria to distribute said sequence operation to said first system (H-SVR); and
a job execution requesting means (34:342) for issuing said interface means (111), in accordance with said distribution criteria (35:351), with a lob execution request for having said first system (H-SVR) execute a job, wherein
when receiving said job execution request, said first system (H-SVR) executes said job execution request as a part of said first sequence via said interface means (111).

2. The collaboration network system (CNS) according to Claim 1, wherein said job execution requesting means (34:342)
comprises a job determining means (34:342) for determining, in accordance with said distribution criteria (35:351), said job to be executed in said first system to generate job request information ((353)), and
generates said job execution request in accordance with said job request information ((353)).

3. The collaboration network system (CNS) according to Claim 1, wherein, when receiving said job execution request, said first system (H-SVR) executes said job execution request as a part of said first sequence via said interface means (111), and further returns a result of execution to said second system (GS).

4. The collaboration network system (CNS) according to Claim 1, wherein said interface means (111) further comprises an initial program storing means (1112) for storing an initialization program,
after said interface means (111) running said initialization program, said first system (H-SVR) is caused to detect said resource included in said first system to notify said second system,
said second system determines, in accordance with said resource of said first system detected by said interface means and said distribution criteria (352) stored in said distribution criteria storing means, tasks for every job to be executed as a sequence operation of said first system, and then generates collaboration processing information ((351)), and
said job execution requesting means (342) issues said job execution request in accordance with the collaboration processing information ((351)).

5. The collaboration network system (CNS) according to Claim 4, wherein said interface means (111) further comprises a guest net client information storing means (1113) for storing a processing program executing said first sequence registered in said first system (H-SVR),
said initialization program ((1112)) detects initialization information registered in said first system (H-SVR) to store in said guest net client information storing means (1113), and
said job execution requesting means (34:342) generates said collaboration processing information ((351)) in accordance with initialization information ((1113)) stored in said guest net client information storing means (1113) and distribution criteria information reserved in said distribution criteria information storing means (352).

6. The collaboration network system (CNS) according to Claim 5, wherein said collaboration processing information (351) comprises
a procedure to process tasks for every job and addressee information, wherein
said addressee information comprises server information, a program number, version information, and applicable resource information.

7. The collaboration network system (CNS) according to Claim 6, wherein said server information
comprises an IP address, a server name, and applicable protocol information of said first system (H-SVR),
said program number comprises an address where a program exists in a server,
said version information comprises available service and a program version, and
said applicable resource information includes information indicating which resource in said first system (HNS) is used.

8. The collaboration network system (CNS) according to Claim 7, wherein said second system further comprises:
a job request accepting means (4) for accepting a job request from a user; and
a service displaying means (4) for displaying a service available by said second system, wherein after said sequence operation primarily executed by said second system (GS) being confirmed, said job execution requesting means (34:342) registers a function which can be put available by said sequence operation in said job request accepting means (4) and said service displaying means(4).

9. The collaboration network system (CNS) according to Claim 1, wherein said interface means (111) further comprises a task executing means (1111) for storing a necessitated program including a library of a process task executing said sequence operation, and
executes the program stored in said task executing means (1111) to execute said sequence operation in response to said job execution request.

10. The collaboration network system (CNS) according to Claim 5, wherein said distribution criteria information (352) comprises:
information peculiar to said first system (GS) including basic function, information and versions on basic processing of said first system; and
an externally-available function indicating a sequence to be executed in said second system (H-SVR).

11. The collaboration network system (CNS) according to Claim 4, wherein said second system further comprises a service managing means (341) for detecting said resource included in said first system (H-SVR) at predetermined time intervals, and
updates said collaboration processing information ((351)) when there is any change of state in said resource of said first system.

12. The collaboration network system (CNS) according to Claim 4, wherein said service managing means (341) detects said resource included in said first system (H-SVR) in accordance with a state change notifying signal outputted from said first system (H-SVR).

13. A method of constructing a collaboration network system (CNS) in which a first system (H-SVR) operating in accordance with a first sequence is connected to a second system (GS) operating in accordance with a second sequence, and said second system (GS) primarily executes a sequence operation while utilizing a resource of said first system (GS), the method comprising:
a system connection step (S201, S2) of connecting said second system (GS) to said first system (H-SVR);
an interface incorporation step (S201, S2) of incorporating an interface means (111) into an application layer (11) executing said first sequence of said first system (H-SVR);
an initialization detection step (S203, S204: S3 to S11, S107) of, by said interface means (111), detecting said resource included in said first system (H-SVR) and generating initialization information; and
a task distribution determination step (S205: S109) of, in accordance with said detected resource information and predetermined distribution criteria (352), determining tasks for every job to be executed as a sequence operation of said first system to generate and store collaboration processing information ((351)), wherein
said interface means (111) causes, in accordance with said collaboration processing information (351), a part of a sequence operation of said second system to execute as a part of said sequence operation of said first system (H-SVR).

14. The method of constructing the collaboration network system (CNS) according to Claim 13, further comprising
an available function registration step (S207) of, in accordance with said collaboration processing information ((351)) generated in said task distribution determination step (S205: S109), registering an available function by said sequence operation in said second system (GS: 4), wherein
in this stage, a function in collaboration processing is started to serve.

15. The method of constructing the collaboration network system (CNS) according to Claim 14, further comprising
a change of resource state detection step (S209) of detecting a state of said resource included in said first system (H-SVR) detected by said initialization detection step (S203, S204: S3 to S11, S107) at predetermined time intervals, wherein
when any change of state in the resource is detected, said initialization detection step (S203, S204: S3 to S11, S107), said task distribution determination step (S205: S109), and said available function registration step (S207) are executed.

16. The method of constructing the collaboration network system (CNS) according to Claim 13, wherein said system connection step (S201, S2) comprises:
a physical connection step of physically connecting said second system (GS) to said first system (H-SVR); and
a mutual-communication environment establishment step of establishing a communication path between said physically-connected said first system (H-SVR) and said second system (GS).

17. The method of constructing the collaboration network system (CNS) according to Claim 16, wherein said interface incorporation step (S201, S2)
incorporates said interface means (111) into said application layer (11) executing said first sequence of said first system (H-SVR) via said communication path established by said mutual-communication environment establishment step, and
further incorporates an initialization program ((1112)) into said interface means (111).

18. The method of constructing the collaboration network system (CNS) according to Claim 17, wherein said initialization detection step (S203, S204: S3 to S11, S107) comprises:
a collaboration processing environment construction step of running said initialization program ((1112)) to provide said first system with a mechanism for collaboration processing; and
an available function acquisition step of detecting and acquiring a function available by said first system (H-SVR) from said resource of said first system (H-SVR) disclosed by a service disclosure function of said first system.

19. The method of constructing the collaboration network system (CNS) according to Claim 18, wherein said task distribution determination step (S205: S109)
allocates collaboration information, in accordance with said distribution criteria (352), by registering an execution program, generating and registering said collaboration processing information (351).

20. A second system (GS) being connected to a first system (H-SVR) operating in accordance with a first sequence, and primarily executing a second sequence operation while utilizing a resource of said first system (GS) in which an application layer (11) is provided with an interface means (111), wherein
said second system (GS) comprises:
a distribution criteria storing means (35) for storing distribution criteria when a part of said second sequence operation is distributed to said first system (H-SVR); and
a job execution requesting means (342) for issuing said interface means (111) with a job execution request for having said first system (H-SVR) execute, and
causes said job execution request to execute as a part of said first sequence via said interface means (111).

21. The second system (GS) according to Claim 20, comprising:
a distribution criteria storing means (35) for storing distribution criteria to distribute said sequence operation to said first system (H-SVR); and
a job execution requesting means (34:342) for issuing said interface means (111) with said job execution request for having said first system (H-SVR) execute in accordance with said distribution criteria (35:351), wherein
when receiving said job execution request, said first system (H-SVR) executes said job execution request as a part of said first sequence via said interface means (111).

22. The second system (GS) according to Claim 21, wherein said job execution requesting means (34:342)
determines, in accordance with said distribution criteria (35:351), a job to be executed in said first system, comprises a job determining means (34:342) for generating job request information ((353)), and generates said job execution request in accordance with said job request information ((353)).

23. The second system (GS) according to Claim 21, wherein said interface means (111) further comprises an initialization program ((1112)),
after said interface means (111) running said initialization program ((1112)), said first system (H-SVR) is caused to detect said resource included in the first system (H-SVR) to notify said second system,
said second system determines, in accordance with the resource of said first system detected by said interface means (111) and said distribution criteria ((352)) stored in said distribution reference storing means (35), tasks for every job to be executed as said sequence operation of said first system to generate collaboration processing information ((351)), and
said job execution requesting means (342), in accordance with said collaboration processing information ((351)), issues said job execution request.

24. The second system (GS) according to Claim 23, wherein said interface means (111) further comprises a guest net client information storing means (1113) for storing a processing program executing said first sequence registered in said first system (H-SVR),
said initialization program ((1112)) detects initialization information registered in said first system (H-SVR) to store in said guest net client information storing means (1113), and
said job execution requesting means (34:342), in accordance with said initialization information ((1113)) stored in said guest net client information storing means (1113) and said distribution criteria information reserved in said distribution criteria information storing means (352), generates said collaboration processing information ((351)).

25. The second system (GS) according to Claim 24, wherein said collaboration processing information ((351)) comprises
a procedure to process tasks for every job and addressee information, wherein
said addressee information includes server information, a program number, version information, and applicable resource information.

26. The second system (GS) according to Claim 25, wherein said server information comprises
an IP address, a server name, and applicable protocol information of said first system (H-SVR),
said program number comprises an address where a program exists in a server,
said version information comprises available service and a program version,
said applicable resource information comprises information indicating which resource in said first system (HNS) is used.

27. The second system (GS) according to Claim 25, further comprising:
a job request accepting means (4) for accepting a job request from a user; and
a service displaying means (4) for displaying a service available by said second system, wherein
after said sequence operation primarily executed by said second system (GS) being confirmed, said job execution requesting means (34:342) registers a function which can be put available by said sequence operation in said job requesting accepting means (4) and said service displaying means.

28. The second system (GS) according to Claim 24, wherein said distribution criteria information (352) comprises:
information peculiar to said first system (GS) including basic function, information and version on basic processing of said first system; and
an externally-available function indicating a sequence to be executed in said second system (H-SVR).

29. The second system (GS) according to Claim 23, further comprising a service managing means (341) for detecting said resource included in said first system (H-SVR) at predetermined time intervals, and
updates said collaboration processing information ((351)) when there is any change of state in said resource of said first system.

30. The second system (GS) according to Claim 23, wherein said service managing means (341) detects said resource included in said first system (H-SVR) in accordance with a state change notifying signal outputted from said first system (H-SVR).

31. A recording medium (CD) including a program incorporated into an application layer (11) of a first system (H-SVR) to be executed in a collaboration network system in which said first system (H-SVR) operating in accordance with a first sequence is connected to a second system (GS) operating in accordance with a second sequence, the program being for realizing an operational environment in the collaboration network system comprising:
an initialization detection step of detecting a resource included in said first system (H-SVR) and generating initialization information;
a task distribution determination step of, in accordance with said detected resource information and predetermined distribution criteria (352) previously possessed by said second system, determining tasks for every job to be executed as a sequence operation of said first system to generate and store collaboration processing information (351); and
a step of, in accordance with said collaboration processing information (351), causing a part of sequence operation of said second system as a part of the sequence operation of said first system (H-SVR).

32. A guest system (G-SVR) being connected to a host system (H-SVR) operating in accordance with a first sequence (11), and operating in accordance with a second sequence (37) constructing a collaboration network system (CNS) in which a resource of said host system (H-SVR) is utilized, said guest system (GS) comprising:
a resource detecting means (S107, 341, 1118, 1115) for detecting said resource of said first system (S-SVR); and
a sequence altering means (111) for altering said first sequence (11) in accordance with said detected resource of said host system (H-SVR).

33. The guest system (GS) according to Claim 32, further comprising
a service adding means (34, 35) for, in accordance with said detected resource of a host system (H-SVR), adding a service function of the host system (H-SVR) to a service function (33) of said guest system (GS) to generate a new service function (352, 353).

34. The guest system (GS) according to Claim 33, wherein said service adding means (34, 35) further comprises
a task distributing means (34) determining distribution of tasks between said resources of said host system (H-SVR) and said guest system (GS) for every job executing said new service function (352, 353).

35. The guest system (GS) according to Claim 34, wherein said service adding means (34, 35) further comprises
a task distribution information storing means (35) for storing information on tasks to be allocated between said host system (H-SVR) and said guest system (GS) for every job executing said new service function (352, 353).

36. The guest system (GS) according to Claim 34, wherein said resource detecting means (S107, 341, 1118, 1115) repeatedly detects said resource of said host system (H-SVR) at predetermined time intervals.

37. The guest system (GS) according to Claim 32, wherein said resource detecting means (S107, 341, 1118, 1115) displays a change in said resource of said host system (H-SVR), if any.

38. The guest system (GS) according to Claim 32, further comprising
an interpreter layer incorporating means (CD) for incorporating said host system (H-SVR) with an interpreter layer (111) accepting a command from said guest system.

39. The guest system (GS) according to Claim 38, further comprising
a service adding means (34, 35) for adding, in accordance with said detected resource of said host system (H-SVR), a service function of said host system (H-SVR) to a service function (33) of said guest system (GS) to generate a new service function (352, 353).

40. The guest system (GS) according to Claim 38, wherein said interpreter layer incorporating means (CD) further comprises
a new service execution sequence incorporating means (1111) for incorporating said host system (H-SVR) with a sequence (1111) executing a new service function (352, 353).

41. A collaboration network system (CNS) in which a first system (H-SVR) operating in accordance with a first sequence (11) is connected to a second system (GS) operating in accordance with a second sequence (37) to distribute a job of said second system (GS) to a resource of said first system (H-SVR), said collaboration network system (CNS) comprising:
a resource detecting means (S107, 341, 1118, 1115) for detecting said resource of said first system (H-SVR); and
a sequence altering means (111) for altering said first sequence (11) in accordance with said detected resource of said first system (H-SVR).

42. The collaboration network system (CNS) according to Claim 41, further comprising
a service adding means (34, 35) for adding, in accordance with said detected resource of said first system (H-SVR), a service function of said first system (H-SVR) to a service function (33) of said second system (G-SVR) to generate a new service function (352, 353).

43. The collaboration network system (CNS) according to Claim 42, wherein said service adding means (34, 35) comprises
a task distribution means (34) for determining distribution of tasks between said resources of said first system (H-SVR) and said second system (GS) for every job executing said new service function (352, 353).

44. The collaboration network system (CNS) according to Claim 43, wherein said service adding means (34, 35) comprises
a task distribution information storing means (35) for storing information on tasks to be allocated between said host system (H-SVR) and said guest system (GS) for every job executing said new service function (352, 353).

45. The collaboration network system (CNS) according to Claim 41, wherein said resource detecting means (S107, 341, 1118, 1115) repeatedly detects said resource of said first system (H-SVR) at predetermined time intervals.

46. The collaboration network system (CNS) according to Claim 41, wherein said resource detecting means (S107, 341, 1118, 1115) displays a change of said resource of said first system (H-SVR), if any.

47. A method of constructing a collaboration network system (CNS) in which a first system (H-SVR) operating in accordance with a first sequence (11) is connected to a second system (GS) operating in accordance with a second sequence (37) to distribute a job of said second system (GS) to a resource of said first system (H-SVR), the method comprising:
a resource detection step (S3, S107) of detecting said resource of said first system (H-SVR); and
a sequence alternation step (S207) of altering said first sequence (11) in accordance with said detected resource of a first host system (H-SVR).

48. The method of constructing the collaboration network system according to Claim 47, further comprising
a service addition step (S11, S109) of adding, in accordance with said detected resource of said first system (H-SVR), a service function of said first system (H-SVR) to a service function (33) of said second system (G-SVR) to generate a new service function (352, 353).

49. The method of constructing the collaboration network system according to Claim 48, wherein said service addition step (S11, S109) comprises
a task distribution step (S109) of determining distribution of tasks between said resources of said first system (H-SVR) and said second system (GS) for every job executing said new service function (352, 353).

50. The method of constructing the collaboration network system according to Claim 47, wherein said resource detection step (S3, S107) comprises
a resource update detection step (S7 to S19, S107 to S115)of repeatedly detecting the resource of said first system (H-SVR) at predetermined time intervals.

51. The method of constructing the collaboration network system according to Claim 47, wherein said resource detection step (S3, S107) comprises
a resource update display step (S7) of displaying a change of said resource of said first system (H-SVR), if any.

52. The method of constructing the collaboration network system according to Claim 47, wherein said host system (H-SVR) further comprises
an interpreter layer (S201) incorporation step of incorporating an interpreter layer (111) accepting a command from said guest system (GS).

53. The method of constructing the collaboration network system according to Claim 52, further comprising:
a mutual-communication environment construction step (S1) of constructing a mutual-communication environment between said first system (H-SVR) and said second system (GS);
a collaboration environment incorporation step (S203, S3 to S11) of incorporating said first system (H-SVR) with a mechanism for achieving collaboration processing with said second system (GS),
a processing allocation determination step (S205, S109) of determining, in accordance with said detected resource, processing allocation (351) between said first (H-SVR, GS) and second systems; and
a new function offer step (S207, S111) of determining a new function in accordance with said determined processing allocation (351), and putting the same available.

54. The method of constructing the collaboration network system according to Claim 52, further comprising
a resource update detection step (S7 to S19, S107 to S115) of repeatedly detecting said resource of said first system (H-SVR) at predetermined time intervals.

55. The method of constructing the collaboration network system according to Claim 52, wherein, when a request for carrying out job (JOB 2) is generated in said second system (GS),
said second sequence (37) comprises a job request step of transmitting said request for carrying out said job (JOB 2) to said interpreter layer (1111), and
said interpreter layer (1111) comprises a step (201 to 205) of controlling said second system (H-SVR) in accordance with the processing allocation (351).
